# EUROPEAN PATENT APPLICATION

(11) **EP 3 736 757 A1**
(43) Date of publication of application: **11.11.2020**
(21) Application number: 20173558.6
(22) Date of filing: 07.05.2020
(51) Int. Cl.: G06Q 10/08, G06Q 30/00, G06Q 30/02

(54) **A SYSTEM AND METHOD FOR PRODUCT AUTHENTICATION**

(30) Priority: 08.05.2019 GB 201906450
(71) Applicant: Escudo Web Software SL, 45600 Toledo (ES)
(72) Inventor: Galán, Carlos Rueda, 45600 Toledo (ES); Douglas, Brian J, 45600 Toledo (ES)
(74) Representative: Bryer, Pamela Ruth

(57) **Abstract**

A product authentication system is described comprising a distributed ledger on which authentication data and ownership data for a product is stored. An ownership module is configured to add ownership data to the distributed ledger upon receipt of an ownership update request from a registered user. An authentication module is configured to i) query the authentication data and ownership data on the distributed ledger upon receipt of an authentication request from a user and to ii) relay an authentication response to the user wherein the authentication response indicates whether the product is authenticated and, if authenticated, identifies an owner of the product. A method of product authentication is also described.

## Description

### Field of the invention

The present invention relates to a computer system and computer-implemented method for product authentication.

### Background of the invention

It is known to use quick response (QR) codes or the like to uniquely identify products and to provide an authentication service whereby a potential purchaser of the product can scan the QR code using his/her mobile device to confirm whether or not the product is authentic.

In some systems, traditional databases are used to store data against which a scanned QR code is authenticated. However, it is difficult to guarantee that the information stored in the database has not been compromised. In addition, the information stored in such databases is often limited and not suitable for what the market demands.

In some cases, a distributed ledger (e.g. Blockchain) may be used to store data against which a scanned QR code is authenticated. However, control of access and addition of data to the distributed ledger needs to be carefully managed to ensure authenticity.

It is therefore an aim of the present invention to provide a system and method for product authentication which aims to address the above problems.

### Summary of the invention

In general terms, the present disclosure proposes a computer system and computer-implemented method for product authentication.

In a first aspect of the present invention, there is provided a product authentication system comprising:
a distributed ledger on which authentication data and ownership data for a product is stored;
an ownership module configured to add ownership data to the distributed ledger upon receipt of an ownership update request from a registered user; and
an authentication module configured to i) query the authentication data and ownership data on the distributed ledger upon receipt of an authentication request from a user and to ii) relay an authentication response to the user wherein the authentication response indicates whether the product is authenticated and, if authenticated, identifies an owner of the product.

Thus, embodiments of the invention provide a product authentication system configured to securely store authentication data and ownership data on a distributed ledger (e.g. Blockchain) and while any user can obtain read-only access to the authentication data and ownership data for performing product authentication, only registered (i.e. vetted) users are allowed to add ownership data (i.e. to record a change in ownership). This ensures that the authentication data and ownership data remain secure whilst allowing legitimate new owners to record their ownership on the distributed ledger. Thus, a chain of title to a product can be verified and users can find out whether the seller of a product is the true (current) owner before deciding whether to purchase it. If all ownership data is provided, a complete record can be obtained ensuring traceability throughout the production and distribution chain. This reduces the risk of a counterfeit or stolen product being sold onto a customer unknowingly. Thus, although traditional use of distributed ledgers permits anonymity, embodiments of the present invention serve to introduce identification of a legitimate product owner for increased authenticity.

The ownership module may be configured to receive a registration request from one or more of a producer, manufacturer, supply chain operator, retailer or customer and to register said producer, manufacturer, supply chain operator, retailer or customer as a registered user if predetermined criteria is met, such that said producer, manufacturer, supply chain operator, retailer or customer is capable of recording their ownership of the product. This is advantageous as it can allow complete traceability of a product adding increased confidence to the authenticity of a product. Furthermore, if a customer registers their ownership of a product this can subsequently be used to verify their title to the product, for example, if it is subsequently sold on or stolen.

The predetermined criteria may comprise verification of one or more of a name, address, business entity or verification code provided in the registration request. This information may be verified against pre-registered details (i.e. submitted by the manufacturer identifying the supply chain operators and retailers for the products concerned) or against other means to verify the identity of the user to be registered.

The product authentication system may further comprise a creation module configured to add authentication data to the distributed ledger upon receipt of a creation request from an authorised user. A manufacturer, for example, may be both an authorised user and a registered user.

The product authentication system may further comprise a communication module configured to handle communications between the authentication module and the distributed ledger and between the ownership module and the distributed ledger, and wherein the communication module has read and write capability on the distributed leger. Thus, embodiments of the invention provide a system in which authentication and ownership data are securely maintained on a distributed ledger, and on which access to the data is made only through a communication module, which greatly increases the security of the data.

The communication module may be further configured to handle communications between the creation module and the distributed ledger.

The ownership module may be provided on an ownership server and/or the authentication module may be provided on an authentication server. The creation module may be provided on a creation server. The communication module may be provided on a communication server. In other embodiments, the communication module may be provided on the distributed ledger.

The authentication response may comprise further data selected from the authentication data and/or ownership data. The further data may comprise an owner location.

The authentication data may comprise one or more of: an identifier; a product code; a product description; a product name; a product type; a batch identifier; a consignment code; raw material data; a manufacturer identifier; a time stamp; a date stamp; a production date; a production place; an expiry date; pricing data, temperature, pressure, spectral colour, luminosity level and destination data.

The ownership data may comprise one or more of: an identifier; a shipping code; place of passage data; previous owner data; current owner data; transaction data; supply chain data; transit data; distributer data; location data; export/import data; and geographical or regional data.

A second aspect of the invention provides an ownership module for use in the product authentication system of the first aspect. The ownership module may comprise:
a receiver module configured to receive an ownership update request from a registered user, the ownership update request comprising at least a product identifier; and
a transfer module configured to transfer the ownership of at least one product associated with the product identifier to the registered user by adding details of the registered user to the ownership data associated with the product identifier in the distributed ledger.

The ownership module may be further configured to perform one or more of the following tasks:
a. check whether the registered user is entitled to take ownership of the product;
b. check whether the product has been flagged as lost, stolen or destroyed in the distributed ledger;
c. check whether the product identifier relates to more than one product and update the ownership data for all products associated with the product identifier.

A third aspect of the invention provides an authentication module for use in the product authentication system of the first aspect. The authentication module may comprise:
a query module configured to receive an authentication request from a user and to query the authentication data in the distributed ledger to verify whether or not the authentication request relates to authentication data in the distributed ledger; and
a response module configured to transmit an authentication response to the user, the authentication response indicating whether or not the authentication request is verified.

A fourth aspect of the invention provides a creation module for use in the product authentication system of the first aspect. The creation module may comprise:
a receiver module configured to receive a creation request from an authorised user, the creation request comprising at least a product identifier for at least one product and authentication data associated with the at least one product; and
an addition module configured to add the authentication data for the at least one product associated with the product identifier to the distributed ledger.

A fifth aspect of the invention provides a communication module for use in the product authentication system of the first aspect. The communication module may comprise:
a write module configured to receive the ownership update request comprising ownership data to be written on the distributed ledger, and to write the ownership data on the distributed ledger;
a query module configured to receive the authentication request from the authentication module and to query the authentication data and ownership data in the distributed ledger to verify whether or not the authentication request relates to authentication data and/or ownership data in the distributed ledger; and
a response module configured to transmit a response to the authentication module, the response indicating whether or not the authentication request is verified and providing associated ownership data.

The response module may be further configured to transmit a response to the ownership module, the response indicating whether or not the ownership update request has been duly carried out.

A sixth aspect of the invention provides a method for product authentication comprising:
receiving an ownership update request comprising ownership data to be written on a distributed ledger on which authentication data is stored;
writing the ownership data on the distributed ledger;
receiving an authentication request;
querying the authentication data in the distributed ledger to verify whether or not the authentication request relates to authentication data and/or ownership data in the distributed ledger; and
transmitting an authentication response indicating whether or not the authentication request is verified and providing associated ownership data.

A seventh aspect of the invention provides a non-transitory computer-readable medium comprising programming instructions operable by a processor to carry out the method of the sixth aspect.

The authentication request and/or the ownership update request may be generated via an application which may be website or mobile based and which may be transmitted via a webserver.

The authentication data may be written (i.e. created) on the distributed ledger by one or more manufacturers. Each manufacturer may provide authentication data to a different distributed ledger.

The terms "component," "module," "system," "apparatus," or the like are generally intended to refer to a computer-related entity, either hardware, a combination of hardware and software, software, or software in execution. For example, a module may be, but is not limited to being, a process running on a processor, a processor, an object, an executable, a thread of execution, a program, and/or a computer. By way of illustration, both an application running on a controller and the controller can be a module. One or more modules may reside within a process and/or thread of execution and a module may be localized on one computer and/or distributed between two or more computers.

Moreover, the claimed subject matter may be implemented as a method, apparatus, or article of manufacture using standard programming and/or engineering techniques to produce software, firmware, hardware, or any combination thereof to control a computer to implement the disclosed subject matter. For instance, the claimed subject matter may be implemented as a computer-readable medium embedded with a computer executable program, which encompasses a computer program accessible from any computer-readable storage device or storage media. For example, computer readable media can include but are not limited to magnetic storage devices (e.g., hard disk, floppy disk, magnetic strips ...), optical disks (e.g., compact disk (CD), digital versatile disk (DVD) ...), smart cards, and flash memory devices (e.g., card, stick, key drive ...).

### Brief description of the drawings

Non-limiting embodiments of the invention will now be described for the sake of example only, with reference to the following drawings in which:
Fig. 1 shows a product authentication system in accordance with an embodiment of the invention;
Fig. 2 shows steps of a method for product authentication in accordance with an embodiment of the invention, and which may be performed by product authentication system of Fig. 1;
Fig. 3 shows schematically the functional structure of the ownership module comprised in the system of Fig. 1 in accordance with an embodiment of the invention;
Fig. 4 shows schematically the functional structure of the authorisation module comprised in the system of Fig. 1 in accordance with an embodiment of the invention;
Fig. 5 shows schematically the functional structure of the creation module comprised in the system of Fig. 1 in accordance with an embodiment of the invention;
Fig. 6 shows schematically the functional structure of the communication module comprised in the system of Fig. 1 in accordance with an embodiment of the invention; and
Fig. 7 shows schematically the structure of a server which may be used in the product authentication system of Fig. 1 in accordance with embodiments of the invention.

### Detailed description of the embodiment

Embodiments of the present invention relate generally to product authentication to ensure authenticity and traceability throughout a product supply chain and thereafter. In practice, each product will be issued with a unique identifier (ID) at a time of manufacture and the identifier will be stored in a private distributed ledger (e.g. Blockchain) along with related authentication data providing details of the product and ownership data identifying the current owner of the product. For example, the authentication data may comprise a product code; a product description; a product name; a product type; a batch identifier; a consignment code; a manufacturer identifier; a time stamp; a date stamp; a production date; a production place; an expiry date; tracking data; distributer data; destination data; export/import data; pricing data; temperature; pressure; spectral colour; luminosity level and destination data. In addition, the ownership data may comprise one or more of: an identifier; a shipping code; place of passage data; previous owner data; current owner data; transaction data; supply chain data; transit data; distributer data; location data; export/import data; and geographical or regional data. The distributed ledger will constitute a complete unaltered record of the product authentication data and ownership data as it will store the authentication data and ownership data in a Write Once, Read Many (WORM) storage media. This helps to provide confidence in the authenticity and provenance of the product. The identifier will be included on the product or packaging to enable anyone handling the product, for example, parties involved in the product supply chain (e.g. suppliers, distributers, wholesalers and retailers) and potential end customers to submit the identifier to a product authentication system to verify the authenticity of the product. The identifier can be printed on the product or packaging and may comprise numbers, letters or other characters (in come embodiments, the identifier is an alphanumeric or hexadecimal). The identifier may be presented in the form of a quick response (QR) code and/or radio-frequency identification (RFID) tag or the like. The product authentication system will be accessed via a webserver (either via a website or an application, "App" such as those installed on mobile devices). In some embodiments, the product authentication system may be regarded as a transaction validation system. All this helps to provide confidence in the authenticity, origin and ownership of the product.

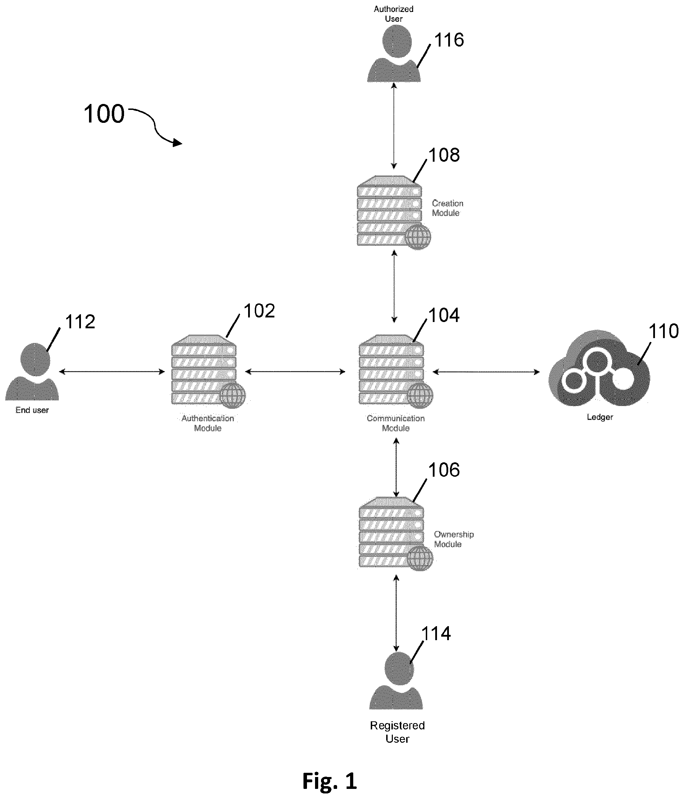

Fig. 1 shows a product authentication system 100 in accordance with an embodiment of the invention. The product authentication system 100 comprises an authentication module 102 (e.g. server) for product authentication using a distributed ledger (e.g. Blockchain) 110 on which authentication data and ownership data is written. Access to the distributed ledger 110 is through a communication module 104 (e.g. server). The functionality of communication module 104 can be incorporated into distributed ledger 110 in some embodiments.

In operation, the authentication module 102 receives an authentication request from a webserver (not shown) where a user application is hosted (the user application can also be installed on a mobile device), which in turn receives the authentication request from a user device 112 (e.g. belonging to an end user). The user device 112 can be a mobile phone, a tablet, a laptop, a personal computer or similar. The authentication module 102 will then query the authentication data and ownership data in the distributed ledger 110 via the communication module 104 to verify whether or not the authentication request is related to the authentication data and ownership data in the distributed ledger 110 and will transmit an authentication response to the webserver, indicating whether or not the authentication request is authenticated and, if authenticated, the authentication response will identify a current owner of the product. The webserver will forward the authentication response to the user device 112 to inform the user as to whether the product has been authenticated and to identify the current owner of the product.

The product authentication system 100 also includes an ownership module 106 (e.g. server) configured to receive an ownership update request from a registered user device 114 (the ownership update request comprising at least a product identifier) and to transfer the ownership of at least one product associated with the product identifier to the registered user by adding details of the registered user to the ownership data associated with the product identifier in the distributed ledger 110. Communication between the ownership module 106 and the distributed ledger 110 is via the communication module 104.

In operation, the ownership module 106 receives the ownership update request via a webserver where an ownership application is hosted (the ownership application can also be installed on a mobile device), which in turn receives the ownership update request from the registered user device 114 belonging to a registered user who is authorised to submit an ownership update request. The registered user device 114 can be a mobile phone, tablet, laptop, personal computer or similar. The ownership module 106 may then check whether the registered user is entitled to take ownership of the product, check whether the product has been flagged as lost, stolen or destroyed in the distributed ledger 110 and check whether the product identifier relates to more than one product and update the ownership data for all products associated with the product identifier. More specifically, the ownership module 106 will transmit the ownership update request to the distributed ledger 110 via the communication module 104 which will update the ownership data on the distributed ledger 110. If the ownership is successfully updated on the distributed ledger 110, the communication module 104 may send an ownership response to the registered user device 114 via the ownership module 106 and ownership application webserver. The ownership response will indicate whether the ownership update request has been processed correctly or not.

The product authentication system 100 also includes a creation module 108 (e.g. server) configured to receive a creation request from an authorised user (e.g. manufacturer), the creation request comprising at least a product identifier for at least one product and authentication data associated with the at least one product and to add the authentication data for the at least one product associated with the product identifier to the distributed ledger 110.

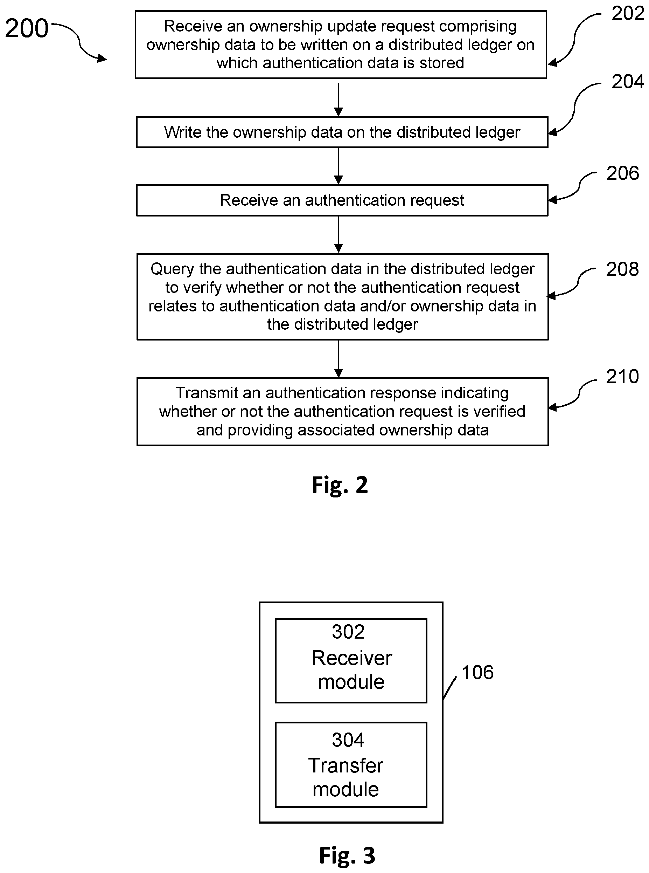

Fig. 2 shows the steps of a method 200 for product authentication according to an embodiment of the invention, which is performed by the modules shown in Fig. 1. Method 200 comprises a first step 202 of receiving an ownership update request comprising ownership data to be written on the distributed ledger 110 on which authentication data is stored and a second step 204 of writing the ownership data on the distributed ledger 110. The method 200 further comprises a step 206 of receiving an authentication request, a step 208 of querying the authentication data in the distributed ledger 110 to verify whether or not the authentication request relates to authentication data and/or ownership data in the distributed ledger 110, and a step 210 of transmitting an authentication response indicating whether or not the authentication request is verified and providing associated ownership data.

The authentication request shall comprise at least one request for authentication of an identifier for a product that has been scanned (i.e., as a QR code) or otherwise introduced into the user device 112. The authentication request may include further details, e.g. relating to the product itself (i.e. product type) and/or the user device 112 (i.e. location, device type, user name, etc.) and/or a date and time stamp for the start of the authentication request.

The authentication module 102 will check, via the communication module 104, if the identifier (at least) matches an identifier included in the authentication data stored on the distributed ledger 110. If other details concerning the product have been included in the authentication request, they can also be compared with the corresponding details of the authentication data stored on the distributed ledger 110 for further verification.

If the identifier (and possibly other details, if included in the authentication request) is determined to match the authentication data, the authentication response will indicate that the authentication request has been verified. In addition, the communication module will query the ownership data associated with the identifier and will include at least details of the current owner in the authentication response. In some embodiments, all ownership data will be included in the authentication response so that the end user can have full access to the ownership history and can trace the product back to the manufacturer or producer. However, if it is determined that the identifier (and possibly other details, if included in the authentication request) does not match the authentication data, the response will indicate that the request has not been verified and no ownership data will be provided. Therefore, a negative response may arise if the identifier is not found on the distributed ledger 110 or if one or more of the other details of the authentication request do not match the product data (e.g. the expiry date has passed or the product type does not match). In addition, the authentication data may be updated with an indicator illustrating whether the identifier has been determined to be corrupt or compromised (i.e. it is a copy or a non-original or stolen product is being used), which may also result in a negative response.

The ownership update request sent to the ownership module 106 and then sent onto the distributed ledger 110 via the communication module 104 shall comprise at least one identifier for a product that has been scanned (i.e., as a QR code) or otherwise entered into the registered user device 114. The ownership update request may include further details, for example, relating to the product itself (i.e., product type) and/or the registered user device 114 (i.e., location, device type, registered user name, etc.) and/or a date and time stamp for the initiation of the ownership update request. The ownership update request will also comprise ownership update data including details of the new owner of the product to be added to the ownership data in the distributed ledger 110.

The ownership module 106 may check whether the registered user device 114 belongs to a registered user recorded in a registered user database. The details of the new owner may be provided by or via the registered user device 114 when sending the ownership update request or may be added by the ownership module 106 after identifying the registered user device 114 and associated registered user in the registered user database. In most cases, the registered user will constitute the new owner of the product.

If the registered user device 114 is not in the registered user database, the ownership module 106 may send a registration request to the registered user device 114 to ask the registered user to provide pre-determined criteria to become a registered user. The predetermined criteria may comprise one or more of: a name, address, business entity, or verification code. This information may be verified against pre-registered details (i.e. submitted by the manufacturer identifying the supply chain operators and retailers for the products concerned) or against other means to verify the identity of the user to be registered. In some embodiments, installation of the ownership application on a registered user device 114 may require the user to respond to a registration request such that only registered users may use the ownership application. In this way, only legitimate and identifiable users may become registered users entitled to take ownership of the product concerned.

The ownership module 106 may check whether the identifier (at least) matches an identifier included in the authentication data stored on the distributed ledger 110. If other details relating to the product have been included in the ownership update request, they can also be compared with the corresponding details of the authentication data stored on the distributed ledger 110 for further verification.

If it is determined that the identifier (and possibly other details, if included in the application) match the existing data on the distributed ledger 110, the ownership update data associated with that identifier in the ownership update request will be sent and written to the distributed ledger 110 via the communication module 104. An ownership update response may be returned to the registered user device 144 to indicate whether the ownership update request has been successful. However, if it is determined that the identifier (and possibly other details, if included in the request) does not match the authentication data stored in the distributed ledger 110, the ownership update response will indicate that the ownership update request has been rejected. Therefore, a negative response may arise if the identifier is not found on the distributed ledger 110 data or if one or more of the other details of the authentication request do not match the product data.

The communication module 104 may comprise at least one computer processor and one data storage device, the data storage device containing the instructions that the processor must follow to perform method 200.

As shown in Figure 3, the ownership module 106 comprises a receiver module 302 and a transfer module 304. The receiver module 302 is configured to receive the ownership update request from the registered user, the ownership update request comprising at least the product identifier. The transfer module 304 is configured to transfer the ownership of at least one product associated with the product identifier to the registered user by adding details of the registered user to the ownership data associated with the product identifier in the distributed ledger 110.

The ownership module 106 may also be configured to check whether the registered user is entitled to take ownership of the product; check whether the product has been flagged as lost, stolen or destroyed in the distributed ledger; and check whether the product identifier relates to more than one product and update the ownership data for all products associated with the product identifier. The ownership module 106 may also comprise a response module configured to transmit a response to the registered user device 114; the response indicating whether the ownership update request has been successful or rejected.

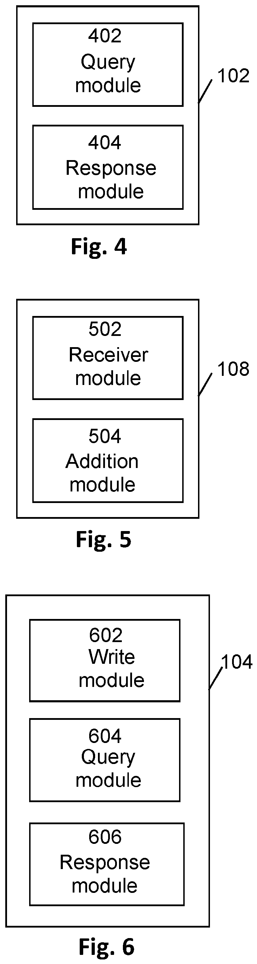

As shown in Figure 4, the authentication module 102 comprises a query module 402 configured to receive an authentication request from the user device 112 via a webserver and to query the authentication data on the distributed ledger 110 to verify whether the authentication request relates to the authentication data in the distributed ledger 110; and a response module 404 configured to transmit the authentication response to the user device 112, the authentication response indicating whether or not the authentication request is verified and provided associated ownership data from the distributed ledger 110.

As shown in Figure 5, the creation module 108 comprises a receiver module 502 and an addition module 504. The receiver module 502 is configured to receive the creation request from the authorised user, the creation request comprising at least the product identifier for at least one product and authentication data associated with the at least one product. The addition module 504 is configured to add the authentication data for the at least one product associated with the product identifier to the distributed ledger 110.

As shown in Figure 6, the communication module 104 comprises a write module 602, a query module 604 and a response module 606. The write module 602 is configured to receive the ownership update request comprising ownership data to be written on the distributed ledger 110, and to write the ownership data on the distributed ledger 110. The query module 604 is configured to receive the authentication request from the authentication module 102 and to query the authentication data and ownership data in the distributed ledger 110 to verify whether or not the authentication request relates to authentication data and/or ownership data in the distributed ledger 110. The response module 606 is configured to transmit the response to the authentication module 102, the response indicating whether or not the authentication request is verified and providing associated ownership data. The response module 606 may be further configured to transmit a response to the ownership module 106, the response indicating whether or not the ownership update request has been duly carried out.

Below are details of an authentication service that will manage the product authentication system 100 for the benefit of manufacturers and customers. Thus, the authentication service provider will manage and maintain the infrastructure of the product authentication system 100. In particular, the authentication service can be implemented as a cloud-based solution accessible to both manufacturers and customers through different user interfaces depending on whether the user is a registered user (entitled to take ownership), authorised user (entitled to add authentication data) or end user (entitled to check authenticity and ownership). Each interface will be provided by a webserver which may be accessible via a mobile device.

To make use of the authentication service, the manufacturer will create an account with the authentication service provider and authorise access for an operator as an authorised user 116 to add the authentication data of the product on the distributed ledger 110 via the creation module 108. The creation module 108 may generate unique identifiers for each product and store them on the distributed ledger 110. The manufacturer will then print labels for its products with the unique identifiers encapsulated in a QR or RFID code. The tags will be incorporated into the products on the production line before the products are shipped to customers through the usual distribution channels. The manufacturer will also authorise access (as authorised users and/or registered users depending on requirements) to other intermediate users in the supply chain so that they can add any necessary traceability data for the products (e.g. when raw material is obtained or in a transfer from a factory to a point of sale) and so that they can transfer ownership of the products (e.g. when it is delivered at the point of sale, when it is sold to the end-user or transferred to another user by a rightful owner).

More specifically, an authorised user 116 can create a batch by entering the following authentication data on the distributed ledger 110 via the creation module 108: producer/manufacturer identifier; type of product; brand; batch identifier; production date; expiry date (or expiry date); traceability of the raw material; and other relevant information (e.g. product information, ingredient details, allergies, etc.). In addition, the products in the batch created will now be assigned to the manufacturer as the owner. The product authentication system 100 can be configured in such a way that no labels are generated for printing unless all required data fields are completed. The creation module 108 can check whether the batch identifier already exists in the distributed ledger 110. If the batch identifier already exists, an error message will be displayed to the authorised user 116 via a webserver along with a request for a different batch identifier. If the batch identifier does not exist, a new batch is created on the distributed ledger 110.

Once the batch addition process is complete, the authorised user can: i) print product labels, either individually or for the entire batch; ii) verify a label on the batch with the individual product data; and iii) if the authorised user has the appropriate permission, he/she can change the status of a batch to indicate that a batch is defective (for example, when products and/or labels appear to have been copied or compromised).

In one embodiment, an open source "QR code generating library" is used to generate a unique identifier for each product and then converted into a QR code that is linked to a URL (Uniform Resource Locator) for a specific block on the distributed ledger 110, which contains the authentication data for that product identifier. Each unique product identifier is generated in a batch (although they can be created individually, if necessary). Error correction can also be included in the QR code using known techniques. In some embodiments, the following information is encoded in each block of the distributed ledger 110: a human-readable time stamp for the time of block creation, a UNIX time stamp for the time of block creation, a unique product identifier (which can be assigned by the manufacturer) and a batch identifier (which can be assigned by the manufacturer), and this data is digitized with a hash of a previous block to create a unique block identifier of the distributed ledger 110. In this particular embodiment, two time stamps are created at the time of block creation - one of which is in a human-readable format and the other in UNIX (or computer-readable) format. The reason for this is so that an operator can easily understand the human-readable time stamp, while the system can perform operations using the UNIX time stamp. In addition, time stamps can be crossed to ensure that they are consistent as another means of authentication. In this embodiment (in others the format may be different) the distributed ledger's 110 unique block identifier is hexadecimal and is based on a private key. There are up to 16 ^ 65 (1.8526734e+78) different combinations of block identifiers in the present embodiment. This creates a unique block identifier of 65 characters, for example: 139a395389ec7af09ca17d4cf6bce64732937378d4eaabcbb9cc5dec4eb5787e

Once the products have been tagged with their respective QR code (or RFID tag), the manufacturer or operator can group the products as they see fit to proceed with their distribution. If necessary these groups of products can be accompanied by a new identifier and QR code that will relate them. From that moment, registered users (e.g. manufacturers, transporters, vendors customers etc.) can read the QR code of a product through the registered user device 114 to make an ownership update request to the ownership module 106 in order to record a change in the ownership of the product or group of products related to the ownership update request, or to transfer ownership of a product or a group of products to another registered user.

### Example 1 - Bottle authentication process

In an embodiment example, a bottle is processed as explained above and distributed with a labelled QR code (e.g. using a specific logo or icon) to indicate that its authenticity can be verified using the product authentication system 100 described in this document. Amongst the data that can be obtained in response to an authentication request are details of at least the current owner of the product (be that a retailer or customer etc.).

In practice, a potential customer would configure his/her user device 112 (i.e. enabling a camera, a QR code reader or installing an user application developed for this purpose) to read the QR code. In case the user device 112 is able to capture the QR code, the user device 112 will extrapolate the URL from the QR code and open a web page or application through which the identifier of the URL block will be used to query the distributed ledger 110 in order to determine if the block exists and if the product is authentic (i.e. the product details match the authentication data of the distributed ledger 110). This process is carried out by authentication module 102 in conjunction with the communication module 104, as explained above, and an authentication response is retransmitted via a webserver to user device 112.

If the authentication response is positive and it is confirmed that the bottle is authentic, the customer is encouraged to have confidence to buy/consume the product. In this case, the authentication module 102 may have performed one or all of the following actions: 1) check that the block exists on the distributed ledger 110; 2) check that the product details obtained from the QR code (e.g. time, product identifier, batch identifier, etc.) match those of the distributed ledger 110; and 3) check whether the batch is marked as bad, faulty or expired. If the bottle is properly identified and does not belong to a "bad" lot, its image, brand, description, expiry date, traceability information and details of its current owner (which may be, for example, the manufacturer, a retailer or other registered user) will be displayed on the user device 112 to give confidence to the consumer that the bottle is authentic.

If the authentication response is negative and the authentication module 102 cannot verify the authenticity of the bottle, the consumer is encouraged not to buy/consume the product. This can happen if the block identifier does not exist on the distributed ledger 110. Therefore, there is also no information about whether the batch is faulty or if it has expired. As the bottle is not on the distributed ledger 110, nor does it belong to a defective or expired batch, no image, mark, description, expiry date, traceability or tracking data, or ownership data can be provided to user device 112. However, the response received on the user device 112 may be provided with a link (i.e. through the website or application) to report the negative authentication response and send information on the geolocation and product details to the authentication service provider and/or the alleged manufacturer of the product, who in turn can inform the relevant local authority identified as investigating counterfeit products (e.g. Crimestoppers).

### Example 2 - Transfer of ownership of a bottle

In an embodiment, a bottle is processed as explained above and a unique identifier and QR code is assigned on its label (e.g. using a specific logo or icon) to indicate that its authenticity can be verified using the product authentication system 100 described in this document. As above, amongst the data that can be obtained in response to an authentication request are details of at least the current owner of the product (be that a retailer or customer etc.).

A registered user, for example a carrier in the supply chain, may access with his registered user device 116 the ownership application installed on a webserver to generate an ownership update request to record a transfer of ownership of the bottle. To generate the ownership update request, the registered user may manually enter the bottle identifier or obtain it by reading the QR code on the bottle label. In addition, data required for traceability (e.g. geolocation, description of the place, date and time, among others) or the transfer of ownership (geolocation, identifiers of the previous owner and the new owner, date and other data of the transfer, among others) may be manually entered by the registered user or otherwise obtained from the registered user device 116 or registered user database. The ownership update request is transmitted to the ownership module 106, from where it is sent to the communication server 104, which finally transfers the ownership update request to the distributed ledger 110 where the data related to the bottle will be stored. Subsequently, the ownership module 106 will transmit, through the webserver to the registered user device 116, an ownership response indicating whether the ownership update request has been processed correctly or not. In the same way, a seller at the point of sale (i.e. another registered user) could transfer ownership of a product to an end user when the latter acquires it.

If the response from the ownership module 106 is positive, it will indicate that the change in the ownership of the bottle to another registered user has been correctly added to the distributed ledger 110.

### System details

Some security measures, such as the use of a "captcha code" with a password, and/or the authorisation of a two-factor short message service (SMS), and/or the use of a security key or digital certificate, can be used to allow an operator to perform certain operations in any of the applications used in the life cycle of the system, among which can be found, for example, the possibility of marking a batch as faulty or simply being able to log in to any of them. This may be necessary to avoid fraudulent activities or to confirm an operation that cannot be reversed.

A communication API has been developed and installed on the communication server 104 to interconnect the authentication module 102, ownership module 106 and creation module 108 with the distributed ledger 110. This allows the distributed ledger 110 to only accept requests from the communication module 104, thus preventing access to the distributed ledger 110 from other unauthorised sources. The communication between these modules and the distributed ledger 110 will always be done through the communication API. In other embodiments the communication API, instead of being hosted on its own module/server can be integrated into the distributed ledger 110 itself.

When the end user uses his user device 112 to capture a QR code or an RFID tag issued by the current authentication service provider, as described above, the URL is extracted, which includes a domain identifier, site and block identifier from the 65-character unique block (for example, http://domain.io/auth/139a395389ec7af09ca17d4cf6bce64732937378d4eaabcbb9c c5dec4eb5787e), however, in other embodiments the format of these elements may vary. If the block identifier exists, authentication data (e.g., batch identifier, product identifier, and time stamps) is queried on the distributed ledger 110 to check whether such authentication data exists for that block. In addition, it is checked that the batch identifier and/or product identifier does not have a "defective batch/product" indicator. If all of the above conditions are met, a positive authentication response and instructions for displaying a product screen that includes at least some of the authentication data and associated ownership data are sent to user device 112, e.g. a product image, a trade name, a short description and an expiry date/best before date, traceability or tracking data, owner data, etc.

The authentication response in the end-user application interface can be further enhanced with links to manufacturers' product pages.

The interfaces of different user applications (i.e. for end users, registered users and authorised users) can be accessible via a website or mobile application (i.e. App).

The system can be configured as a multi-tenant server (e.g. with one or more front end servers, e.g. 3-5 client servers).

System developments may include sending the end user a calendar reminder regarding the expiry date of a product that has been scanned (for example, the reminder may generate a voice or text message).

In some embodiments, artificial intelligence can be used to write batch data in the distributed ledger 110, thus eliminating any possibility of incorrect data entry.

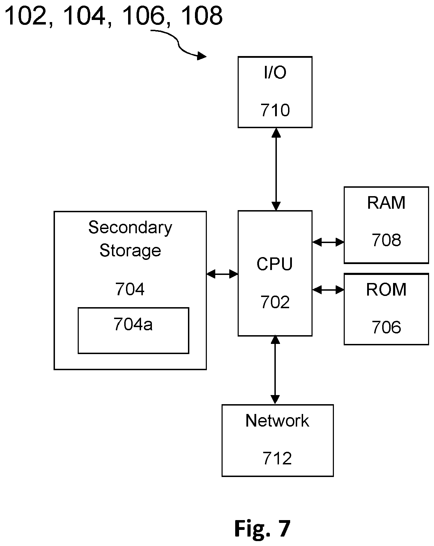

Fig. 7 shows schematically the structure of a server which may be used in the product authentication system 100 of Fig. 1 in accordance with embodiments of the invention. For example, the authentication module 102, the communication module 104, the ownership module 106, the creation module 108 and the distributed ledger 110 may each be constituted by a server having the structure shown in Fig.7.

The server includes a processor 702 (which may be referred to as a central processor unit or CPU) that is in communication with memory devices including secondary storage 704 (such as disk drives), read only memory (ROM) 706, and random access memory (RAM) 708. The processor 702 may be implemented as one or more CPU chips. The technical architecture may further comprise input/output (I/O) devices 710, and network connectivity devices 712.

The secondary storage 704 is typically comprised of one or more disk drives or tape drives and is used for non-volatile storage of data and as an over-flow data storage device if RAM 708 is not large enough to hold all working data. Secondary storage 704 may be used to store programs which are loaded into RAM 708 when such programs are selected for execution.

In embodiments of the invention, the secondary storage 704 has a processing component 704a comprising non-transitory instructions operative by the processor 702 to perform various operations of the method of the present disclosure. The ROM 706 is used to store instructions and perhaps data which are read during program execution. The secondary storage 704, the RAM 708, and/or the ROM 706 may be referred to in some contexts as computer readable storage media and/or non-transitory computer readable media.

I/O devices 710 may include printers, video monitors, liquid crystal displays (LCDs), plasma displays, touch screen displays, keyboards, keypads, switches, dials, mice, track balls, voice recognizers, card readers, paper tape readers, or other input devices.

The network connectivity devices 712 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards that promote radio communications using protocols such as code division multiple access (CDMA), global system for mobile communications (GSM), long-term evolution (LTE), worldwide interoperability for microwave access (WiMAX), near field communications (NFC), radio frequency identity (RFID), and/or other air interface protocol radio transceiver cards, and other network devices. These network connectivity devices 712 may enable the processor 702 to communicate with the Internet or one or more intranets. With such a network connection, it is contemplated that the processor 702 might receive information from the network, or might output information to the network in the course of performing the above-described method operations. Such information, which is often represented as a sequence of instructions to be executed using processor 702, may be received from and outputted to the network, for example, in the form of a computer data signal embodied in a carrier wave.

The processor 702 executes instructions, codes, computer programs, scripts which it accesses from a hard disk, floppy disk, optical disk (these various disk based systems may all be considered secondary storage 704), flash drive, ROM 706, RAM 708, or the network connectivity devices 712. While only one processor 702 is shown, multiple processors may be present. Thus, while instructions may be discussed as executed by a processor, the instructions may be executed simultaneously, serially, or otherwise executed by one or multiple processors.

Although the technical architecture is described with reference to a computer, it should be appreciated that the technical architecture may be formed by two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the server to provide the functionality of a number of servers that is not directly bound to the number of computers in the technical architecture. In an embodiment, the functionality disclosed above may be provided by executing an application and/or applications in a cloud computing environment. Cloud computing may comprise providing computing services via a network connection using dynamically scalable computing resources. A cloud computing environment may be established by an enterprise and/or may be hired on an as-needed basis from a third party provider.

It is understood that by programming and/or loading executable instructions onto the technical architecture, at least one of the CPU 702, the RAM 708, and the ROM 706 are changed, transforming the technical architecture in part into a specific purpose machine or apparatus having the novel functionality taught by the present disclosure. It is fundamental to the electrical engineering and software engineering arts that functionality that can be implemented by loading executable software into a computer can be converted to a hardware implementation by well-known design rules.

Applications for embodiments of the invention are vast and include not only the drinks industry (including alcoholic and non-alcoholic beverages and other specific food products e.g. powder baby milk) but also the pharmaceutical industry, the sports industry, fashion and luxury goods etc.

Whilst the foregoing description has described exemplary embodiments, it will be understood by those skilled in the art that many variations of the embodiments can be made within the scope of the present invention as defined by the claims. Moreover, features of one or more embodiments may be mixed and matched with features of one or more other embodiments.

## Claims

1. A product authentication system comprising:
a distributed ledger on which authentication data and ownership data for a product is stored;
an ownership module configured to add ownership data to the distributed ledger upon receipt of an ownership update request from a registered user; and
an authentication module configured to i) query the authentication data and ownership data on the distributed ledger upon receipt of an authentication request from a user and to ii) relay an authentication response to the user wherein the authentication response indicates whether the product is authenticated and, if authenticated, identifies an owner of the product.

2. The product authentication system of claim 1 wherein the ownership module is configured to receive a registration request from one or more of a producer, manufacturer, supply chain operator, retailer or customer and to register said producer, manufacturer, supply chain operator, retailer or customer as a registered user if predetermined criteria is met, such that said producer, manufacturer, supply chain operator, retailer or customer is capable of recording his/her ownership of the product.

3. The product authentication system of claim 1 or 2 further comprising a creation module configured to add authentication data to the distributed ledger upon receipt of a creation request from an authorised user.

4. The product authentication system of any preceding claim further comprising a communication module configured to handle communications between the authentication module and the distributed ledger and between the ownership module and the distributed ledger, and wherein the communication module has read and write capability on the distributed leger.

5. The product authentication system of claim 4, when dependent on claim 3, wherein the communication module is further configured to handle communications between the creation module and the distributed ledger.

6. The product authentication system of any preceding claim wherein the authentication response comprises further data selected from the authentication data and/or ownership data.

7. The product authentication system of claim 6 wherein the further data comprises an owner location.

8. The product authentication system of any preceding claim wherein the authentication data comprises one or more of: an identifier; a product code; a product description; a product name; a product type; a batch identifier; a consignment code; raw material data; a manufacturer identifier; a time stamp; a date stamp; a production date; a production place; an expiry date; pricing data, temperature, pressure, spectral colour, luminosity level and destination data.

9. The product authentication system of any preceding claim wherein the ownership data comprises one or more of: an identifier; a shipping code; place of passage data; previous owner data; current owner data; transaction data; supply chain data; transit data; distributer data; location data; export/import data; and geographical or regional data.

10. An ownership module for use in the product authentication system of any preceding claim.

11. An authentication module for use in the product authentication system of any one of claims 1 to 9.

12. A creation module for use in the product authentication system of any one of claims 1 to 9.

13. A communication module for use in the product authentication system of any one of claims 1 to 9.

14. A method for product authentication comprising:
receiving an ownership update request comprising ownership data to be written on a distributed ledger on which authentication data is stored;
writing the ownership data on the distributed ledger;
receiving an authentication request;
querying the authentication data in the distributed ledger to verify whether or not the authentication request relates to authentication data and/or ownership data in the distributed ledger; and
transmitting an authentication response indicating whether or not the authentication request is verified and providing associated ownership data.

15. A non-transitory computer-readable medium comprising programming instructions operable by a processor to carry out the method of claim 14.
